(19) Europäisches Patentamt
European Patent Office
Office européen des brevets

(11) **EP 3 942 133 B1**

(12) **EUROPÄISCHE PATENTSCHRIFT**

(45) Veröffentlichungstag und Bekanntmachung des Hinweises auf die Patenterteilung:
**26.04.2023** **Patentblatt 2023/17**

(21) Anmeldenummer: **20716166.2**

(22) Anmeldetag: **06.03.2020**

(51) Internationale Patentklassifikation (IPC):
**E05B 85/20** *(2014.01)*   **E05B 85/24** *(2014.01)*

(52) Gemeinsame Patentklassifikation (CPC):
**E05B 85/20; E05B 85/24;** E05B 77/36

(86) Internationale Anmeldenummer:
**PCT/DE2020/100152**

(87) Internationale Veröffentlichungsnummer:
**WO 2020/187358 (24.09.2020 Gazette 2020/39)**

(54) **TÜRSCHLOSS INSBESONDERE KRAFTFAHRZEUGTÜRSCHLOSS**

DOOR LOCK, IN PARTICULAR MOTOR VEHICLE DOOR LOCK

SERRURE DE PORTE, EN PARTICULIER SERRURE DE PORTE DE VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.03.2019 DE 102019107229**

(43) Veröffentlichungstag der Anmeldung:
**26.01.2022 Patentblatt 2022/04**

(73) Patentinhaber: **Kiekert AG**
**42579 Heiligenhaus (DE)**

(72) Erfinder:
• **INAN, Ömer**
**46282 Dorsten (DE)**

• **SCHIFFER, Holger**
**40668 Meerbusch (DE)**
• **SCHOLZ, Michael**
**45136 Essen (DE)**
• **SZEGENY, Peter**
**51766 Engelskirchen (DE)**
• **SCHÖNENBERG, Thomas**
**51399 Burscheid (DE)**

(56) Entgegenhaltungen:
EP-A1- 0 406 777   EP-A1- 0 496 039
EP-A1- 2 113 048   DE-A1-102009 029 023
DE-A1-102016 201 536   DE-A1-102016 215 336

**Beschreibung**

Die Erfindung betrifft ein Türschloss, insbesondere Kraftfahrzeugtürschloss, mit einem Gesperre aus im Wesentlichen Drehfalle und zumindest einer Sperrklinke, wobei beide Gesperrebauteile jeweils um eine Achse drehbar an einer Basis gelagert sind und dazu das zumindest eine Gesperrebauteil mit einer Lagerfläche an einem ortsfesten Stützkörper entlanggleitet.

Bei Türschlössern und insbesondere Kraftfahrzeugtürschlössern kommt dem Gesperre eine besondere Bedeutung als sicherheitsrelevantes Bauteil zu. Tatsächlich müssen beispielsweise über das Gesperre, insbesondere bei einem Frontalaufprall oder allgemein einem Crash, in die Karosserie eingeleitete Kräfte auf die Karosserie übertragen werden. Tatsächlich wird mit dem Gesperre im Endeffekt verhindert, dass bei einem solchen Vorgang die zugehörige und mit dem Türschloss ausgerüstete Kraftfahrzeugtür aufspringt. Vielmehr kann die Kraftfahrzeugtür zur gezielten Verformung der Karosserie mit beitragen. Das setzt voraus, dass in diesem Fall am Gesperre angreifende, sogenannte Zerreißkräfte aufgenommen werden können.

Diese Zerreißkräfte werden im Allgemeinen von dem Gesperrebauteil über seine Lagerfläche an den ortsfesten Stützkörper und von dort weiter an die Basis übertragen. Bei der Basis handelt es sich meistens um einen massiven Schlosskasten, der an eine Kraftfahrzeugtür zur Weiterleitung der Kräfte angeschlossen ist. Karosserieseitig erfolgt der Kraftfluss über einen mithilfe des Gesperres gefangenen Schließbolzen, welcher seinerseits beispielsweise an eine B-Säule der Kraftfahrzeugkarosserie angeschlossen ist. Neben dieser Kraftbeaufschlagung des Lagers des betreffenden Gesperrebauteils bzw. dessen Lagerfläche in Verbindung mit dem ortsfesten Stützkörper kommt einer besonders reibungsarmen Betätigung des fraglichen Gesperrebauteils eine besondere Bedeutung zu.

Das lässt sich darauf zurückführen, dass heutzutage solche Türschlösser und insbesondere Kraftfahrzeugtürschlösser oftmals elektromotorisch betätigt, insbesondere geöffnet werden. Um an dieser Stelle die Öffnungskräfte möglichst gering einzustellen und mit kleinbauenden Motoren arbeiten zu können, sind bereits verschiedene Ansätze zur Reibungsoptimierung verfolgt worden. So wird bei der DE 10 2016 2015 336 A1 so vorgegangen, dass das Gesperrebauteil, bzw. im konkreten Fall die Sperrklinke, mit einem Lagerkäfig ausgerüstet ist. Der Lagerkäfig nimmt seinerseits beispielsweise eine Kugel oder einen Zylinder auf, um insgesamt für eine Rollreibung zwischen Sperrklinke und Drehfalle sorgen zu können und hierdurch die Reibungsverhältnisse positiv zu beeinflussen.

Beim gattungsbildenden Stand der Technik nach der DE 10 2009 029 023 A1 ist an dieser Stelle die Sperrklinke als drehbar gelagerte Trägerklinke ausgerüstet, welche eine damit über ein Gelenk verbundene sperrende Klinke aufnimmt. Insofern liefert der Stand der Technik bereits Ansätze dahingehend, die Reibungsverhältnisse zwischen Sperrklinke und Drehfalle zu optimieren. Das gesamte zur Betätigung beispielsweise der Sperrklinke als Gesperrebauteil erforderliche Betätigungsmoment hängt jedoch nicht nur von der Reibung zwischen Sperrklinke und Drehfalle im Beispielfall ab, sondern wird besonders auch durch die Lagerreibung der Sperrklinke gegenüber der Basis beeinflusst. An dieser Stelle fehlen bisher vielversprechende Ansätze dahingehend, die fragliche Lagerreibung zu reduzieren.

Tatsächlich wird nämlich typischerweise und entsprechend dem zuvor beschriebenen Stand der Technik nach der DE 10 2016 215 336 A oder auch gemäß der DE 10 2009 029 023 A1 hier meistens so vorgegangen, dass die Sperrklinke oder allgemein das Gesperrebauteil mit einer Öffnung ausgerüstet ist und mit dieser Öffnung auf einen ortsfesten Lagerbolzen aufgesteckt wird. Die Öffnung im fraglichen Gesperrebauteil definiert also die Lagerfläche des Gesperrebauteils, wohingegen der Lagerbolzen als ortsfester Stützkörper bei einer Drehbewegung fungiert. Der Lagerbolzen bzw. ortsfeste Stützkörper ist seinerseits an die Basis, im Allgemeinen einen Schlosskasten, angeschlossen.

Um die Lagerreibung des Gesperrebauteils gegenüber dem Lagerbolzen bzw. dem ortsfesten Stützkörper zu reduzieren, kann insgesamt der Lagerzapfen bzw. dessen Radius reduziert werden. Einer geringeren Dimensionierung des Lagerbolzens in dieser Richtung stehen jedoch die zuvor beschriebenen Festigkeitsanforderungen entgegen. Denn durch die Reduzierung des Durchmessers des Lagerbolzens ist zugleich auch mit einer Reduktion des Widerstandsmomentes gegenüber am Gesperre angreifenden Reißkräften zu rechnen, was aufgrund der zuvor beschriebenen Sicherheitsanforderungen nicht akzeptabel ist. Hier will die Erfindung insgesamt Abhilfe schaffen.

Der Erfindung liegt das technische Problem zu Grunde, ein derartiges Türschloss und insbesondere Kraftfahrzeugtürschloss so weiter zu entwickeln, dass die Lagerreibung des Gesperrebauteils bei zugleich unveränderter oder sogar noch gesteigerter Festigkeit verringert ist.

Zur Lösung dieser technischen Problemstellung ist ein gattungsgemäßes Türschloss und insbesondere Kraftfahrzeugtürschloss im Rahmen der Erfindung dadurch gekennzeichnet, dass der Stützkörper mit einer offenen Lagerwanne zur Aufnahme der Lagerfläche ausgerüstet ist. In diesem Zusammenhang wird weiter und vorteilhaft so vorgegangen, dass das Gesperrebauteil zusätzlich mit einem die Lagerfläche aufweisenden Lagerzapfen ausgerüstet ist. Meistens ist die Lagerfläche dabei frontseitig des Lagerzapfens vorgesehen.

Im Gegensatz zum Stand der Technik greift die Erfindung folglich nicht auf einen Lagerbolzen als ortsfesten Stützkörper zurück, welcher von einer Öffnung im Gesperrebauteil vollständig umschlossen wird. Vielmehr ist das fragliche Gesperrebauteil mit einem Lagerzapfen ausgerüstet, der frontseitig die mit dem Stützkörper wechselwirkende Lagerfläche aufweist. Da darüber hinaus der Stützkörper über eine offene Lagerwanne zur Aufnahme der Lagerfläche verfügt und folglich weder die Lagerfläche noch den Lagerzapfen vollständig umringt, kann der Stützkörper insgesamt im Vergleich zum Stand der Technik mit einem viel größeren Querschnitt als bisher ausgerüstet werden. Da der Stützkörper mit der offenen Lagerwanne ausgerüstet ist, kommt es zwischen der Lagerwanne und der Lagerfläche am Lagerzapfen zu einer drehenden Wechselwirkung über einen bestimmten Schwenkwinkel.

Das heißt, erfindungsgemäß lässt sich der Stützkörper entsprechend dem Lagerbolzen bei den herkömmlichen Türschlössern mit einem demgegenüber größeren Querschnitt ausrüsten, der insgesamt zu einem deutlich erhöhten Widerstandsmoment führt. Tatsächlich verfügt der Stützkörper typischerweise über einen zum Widerstandsmoment gehörigen Widerstandsradius. Die Lagerfläche ist ihrerseits meistens bogenförmig ausgebildet und verfügt über einen Lagerradius. Erfindungsgemäß ist nun die Auslegung so getroffen, dass der Widerstandsradius größer als der Lagerradius ausgebildet ist. Tatsächlich kann der Widerstandsradius wenigstens das 1,2-fache, meistens sogar das 1,5-fache oder noch mehr des Lagerradius aufweisen.

Auf diese Weise lassen sich die zuvor beschriebenen und an sich widerstreitenden Anforderungen im Rahmen der Erfindung problemlos umsetzen und realisieren. Einerseits kann der Lagerradius des zu lagernden Gesperrebauteils relativ gering, jedenfalls geringer als beim Stand der Technik bemessen werden. Dadurch werden optimierte Reibungsverhältnisse zwischen dem fraglichen Gesperrebauteil und dem Stützkörper beobachtet. Trotz dieses geringen Lagerradius werden andererseits vergleichbare oder sogar noch höhere Festigkeiten bzw. Widerstandsmomente erreicht. Das lässt sich darauf zurückführen, dass der mit dem Lagerzapfen zur Lagerung wechselwirkende Stützkörper mit seiner offenen Lagerwanne zur Aufnahme der Lagerfläche am Lagerzapfen über einen Widerstandsradius verfügt, welcher regelmäßig deutlich größer als der Lagerradius ausgebildet ist. Als Folge hiervon weist der Stützkörper einen Querschnitt auf, welcher ein hohes Widerstandsmoment für am Gesperrebauteil angreifende Zerreißkräfte zur Verfügung stellt. Hierin sind die wesentlichen Vorteile zu sehen.

Nach vorteilhafter Ausgestaltung kann der Stützkörper zumindest einen seitlich der Lagerwanne angeordneten Anschlag aufweisen. Meistens sind zwei Anschläge beidseitig der offenen Lagerwanne vorgesehen. Der Anschlag wechselwirkt im Regelfall mit einem Gegenanschlag des Gesperrebauteils.

Durch diese Auslegung wird insgesamt gewährleistet, dass der Anschlag bzw. die beiden Anschläge am Stützkörper seitlich der Lagerwanne eine Schwenkbewegung des Gesperrebauteils gegenüber dem Stützkörper begrenzen. Tatsächlich kommt es an den beiden Grenzen dieser Schwenkbewegung zu einer jeweiligen Wechselwirkung des Anschlages am Stützkörper einerseits und mit dem Gegenanschlag am Gesperrebauteil andererseits. Um an dieser Stelle möglichst geräuscharm zu arbeiten, ist der Gegenanschlag des Gesperrebauteils im Regelfall ganz oder teilweise aus Kunststoff hergestellt und mag zu diesem Zweck zumindest teilweise in oder an einer Ummantelung des betreffenden Gesperrebauteils definiert werden. Der zuvor bereits angesprochene Schwenkwinkel lässt sich hierdurch auf Werte bis zu 90°, vorzugsweise bis zu 60° und besonders bevorzugt bis zu 50° begrenzen.

Die Basis ist im Allgemeinen als vorzugsweise metallischer Schlosskasten ausgebildet. Ein solcher Schlosskasten zeichnet sich regelmäßig durch eine metallische Grundplatte und zwei seitliche ebenfalls metallische Seitenwannen aus, die insgesamt ein im Schnitt U-förmiges Profil bilden. Grundsätzlich sind aber auch L-förmige Formen von Schlosskästen oder auch ebene Schlosskästen möglich und werden von der Erfindung mit umfasst. Der Stützkörper ist an den Schlosskasten angeschlossen. Meistens handelt es sich bei dem Stützkörper um einen an den Schlosskasten angeschlossenen Widerstandsanker. Als Folge hiervon verfügt der Stützkörper über einen bestimmten Widerstandsradius, der zuvor bereits angesprochen wurde. Dieser Widerstandsradius bemisst sich anhand eines Abstandes eines Schwerpunktes des Stützkörpers bis zu seiner Peripherie.

Jedenfalls ist der Widerstandsradius insgesamt größer als der Lagerradius bemessen, welcher der bogenförmigen Ausprägung der Lagerfläche Rechnung trägt und hierdurch definiert wird. In Ergänzung zu den bisherigen Erläuterungen kann der Widerstandsradius sogar das Zweifache des Lagerradius oder noch mehr betragen, ist jedenfalls insgesamt jeweils größer oder deutlich größer als der Lagerradius bemessen.

Wie bereits erläutert, ist das Gesperrebauteil meistens ummantelt ausgebildet bzw. mit einer Ummantelung ausgerüstet. Diese Ummantelung übernimmt erfindungsgemäß eine vielfältige Funktion. Zunächst einmal sorgt die Ummantelung für eine geräuschoptimierte Bewegung des Gesperrebauteils innerhalb des Schlosskastens, wie dies grundsätzlich bekannt ist. Erfindungsgemäß fungiert die Ummantelung zusätzlich noch dahingehend, dass mit ihrer Hilfe der zuvor bereits angesprochene Gegenanschlag des Gesperrebauteils definiert wird, welcher mit dem zugehörigen Anschlag des Stützkörpers wechselwirkt. Durch die Ausprägung des Gegenanschlages in oder an der Ummantelung kommt es in diesem Fall nicht zu einem harten Anschlag zwischen dem Gesperrebauteil und dem Stützkörper, was erneut die geräuschoptimierte Auslegung begünstigt.

Darüber hinaus sieht die Erfindung zusätzlich wenigstens eine Führungsfläche vor. Die Führungsfläche kann in oder an der Ummantelung des Gesperrebauteils und/oder einem Kunststoffgehäuse vorgesehen sein. Die Führungsfläche tritt ergänzend zur Lagerfläche hinzu und unterstützt den Schwenkvorgang des Gesperrebauteils gegenüber dem Stützkörper. Außerdem sorgt die Führungsfläche dafür, dass das Gesperrebauteil in Anlage am Stützkörper gehalten wird.

Zu diesem Zweck wechselwirkt die Führungsfläche im Allgemeinen mit einer Gegenführungsfläche. Die Gegenführungsfläche kann am Gesperrebauteil und/oder dessen Ummantelung und/oder dem zuvor bereits angesprochenen Kunststoffgehäuse realisiert werden. Meistens wird so vorgegangen, dass die Führungsfläche im oder am Kunststoffgehäuse vorgesehen ist und mit einer Gegenführungsfläche in oder an der Ummantelung des betreffenden Gesperrebauteils wechselwirkt, oder umgekehrt.

Bei dem Kunststoffgehäuse handelt es sich typischerweise um ein Schlossgehäuse, mit dessen Hilfe das im Schlosskasten gelagerte Gesperre insgesamt abgedeckt und abgedichtet wird. Das heißt, erfindungsgemäß übernimmt dieses Kunststoffgehäuse noch eine Zusatzfunktion ergänzend zur Abdichtung, nämlich dahingehend, eine oder mehrere Gegenführungsflächen für die Führungsfläche an der Ummantelung des betreffenden Gesperrebauteils zur Verfügung zu stellen. Als Folge hiervon wird die Bewegung des Gesperrebauteils gegenüber dem Stützkörper einwandfrei geführt, wobei durch den zusätzlichen Rückgriff auf Materialpaarungen wie Metall-Kunststoff oder Kunststoff-Kunststoff die ergänzende Führung besonders reibungsarm ausgebildet ist und keine Betätigungsgeräusche erzeugt. Hierin sind die wesentlichen Vorteile zu sehen.

Im Folgenden wird die Erfindung anhand einer lediglich ein Ausführungsbeispiel darstellende Zeichnung erläutert. Es zeigen:

Fig. 1 das erfindungsgemäße Türschloss in seiner grundsätzlichen Ausprägung,

Fig. 2 eine erste Ausführungsform einer Lagerung des Gesperrebauteils bzw. der Sperrklinke im Beispielfall,

Fig. 3 ein weiteres zweites abgewandeltes Ausführungsbeispiel der Lagerung,

Fig. 4 eine weitere dritte Ausführungsvariante und

Fig. 5 ein weiteres viertes Ausführungsbeispiel der Erfindung.

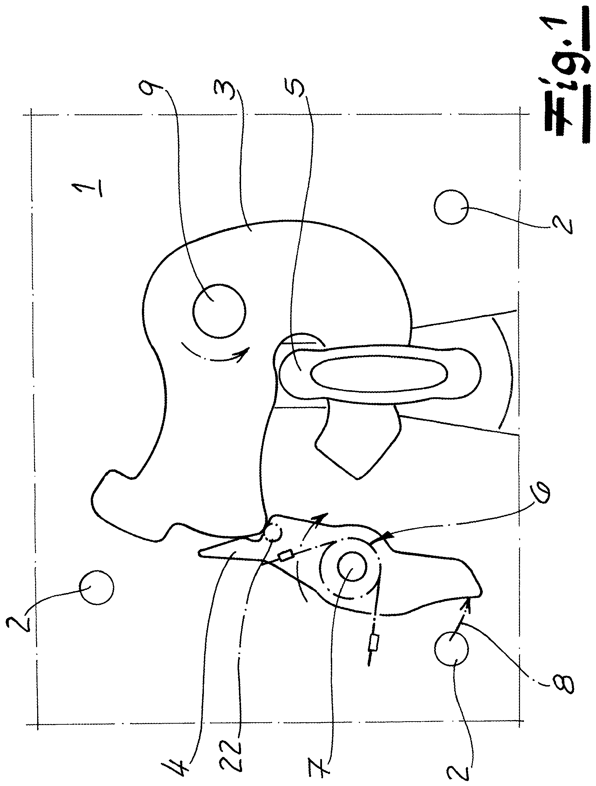

In der Fig. 1 ist ein Türschloss dargestellt, bei dem es sich um ein Kraftfahrzeugtürschloss handelt. Das Kraftfahrzeugtürschloss ist dazu vorteilhaft an eine nicht dargestellte Kraftfahrzeugtür angeschlossen. Hierzu dient eine Basis 1, bei der es sich im Ausführungsbeispiel um einen metallischen Schlosskasten 1 handelt. Der Schlosskasten 1 ist an die nicht dargestellte Kraftfahrzeugtür angeschlossen. Hierzu mögen nicht gezeigte Befestigungsschrauben dienen, die in Öffnungen 2 des Schlosskastens eingreifen.

Im Schlosskasten 1 ist ein Gesperre 3, 4 gelagert, welches sich nach dem Ausführungsbeispiel aus einer Drehfalle 3 und einer Sperrklinke 4 zusammensetzt. Grundsätzlich könnten auch mehr als eine Sperrklinke 4, das heißt ein sogenanntes Mehrklinkengesperre, realisiert sein, was jedoch nicht dargestellt ist. Das Gesperre 3, 4 des Türschlosses bzw. Kraftfahrzeugtürschlosses wechselwirkt mit einem Schließbolzen 5, der an eine nicht dargestellte Kraftfahrzeugkarosserie angeschlossen ist.

In der Fig. 1 ist der geschlossene Zustand des Gesperres 3, 4 nach dem Stand der Technik dargestellt. In diesem geschlossenen Zustand wird der Schließbolzen 5 mithilfe der Drehfalle 3 gefangen, wie dies allgemein bekannt ist. Die Drehfalle 3 wird ihrerseits in der geschlossenen Position bzw. der hier gezeigten Hauptrastposition gehalten, und zwar mithilfe der Sperrklinke 4. Eine zusätzliche Sperrklinkenfeder 6 sorgt in diesem Fall dafür, dass die Sperrklinke 4 mit einem in der Fig. 1 angedeuteten Schließmoment bezüglich seiner Achse 7 ausgerüstet ist, welches in der Fig. 1 angedeutet wird. Auch die Drehfalle 3 verfügt über ein ebenfalls in der Fig. 1 angedeutetes Moment, welches in diesem Fall als öffnendes Moment bzw. Öffnungsmoment ausgebildet ist.

Das Schließmoment an der Sperrklinke 4 arbeitet auf die Sperrklinke 4 in Bezug auf ihre Achse 7 im Uhrzeigersinn. Das Öffnungsmoment der Drehfalle 3 arbeitet auf seine Achse 9 im Gegenuhrzeigersinn. Zusätzlich erkennt man in der Fig. 1 noch einen elektrischen Antrieb bzw. Öffnungsantrieb 8, welcher die Sperrklinke 4 mit einem öffnenden Moment bzw. Öffnungsmoment im Gegenuhrzeigersinn in Bezug auf die Achse 7 beaufschlagt. Sobald die Sperrklinke 4 mithilfe des Öffnungsantriebes 8 von ihrem Eingriff mit der Drehfalle 3 abgehoben wird, kann die Drehfalle 3 aufgrund ihres (insbesondere durch Türgummidichtungskräfte verursachten) Öffnungsmomentes aufschwenken und gibt den Schließbolzen 5 frei.

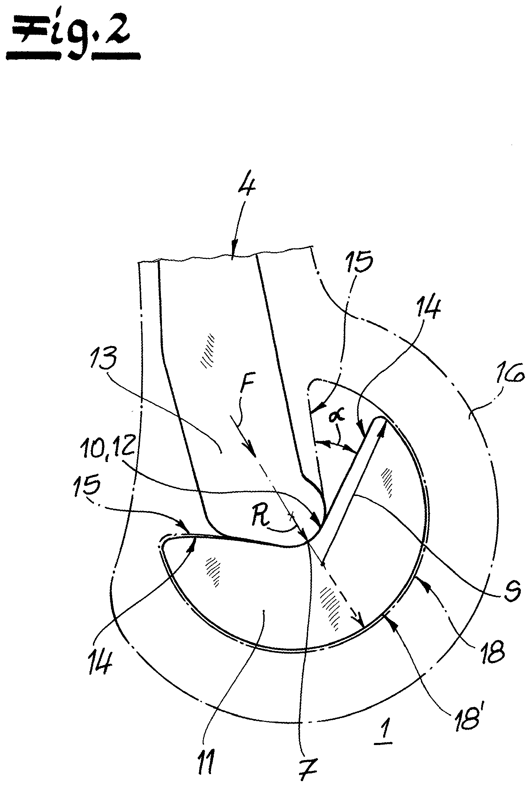

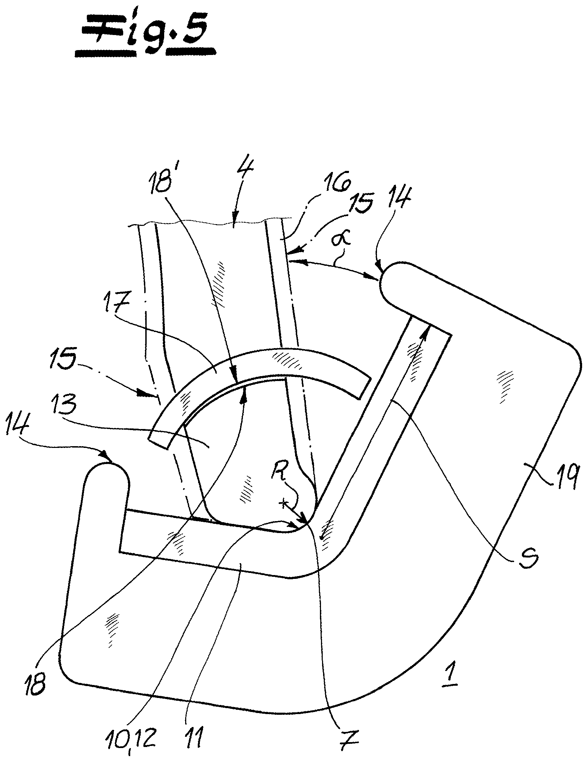

In den Figuren 2 bis 5 sind nun verschiedene Varianten der Lagerung eines Gesperrebauteils 3, 4, im konkreten Beispielfall der Sperrklinke 4, dargestellt. Tatsächlich ist das fragliche Gesperrebauteil 3, 4 bzw. die Sperrklinke 4 im Bereich ihrer Achse 7 nach dem Ausführungsbeispiel so gelagert, wie dies im Detail in den Figuren 2 bis 5 anhand unterschiedlicher Ausführungsbeispiele deutlich wird. Zu diesem Zweck verfügt das fragliche Gesperrebauteil bzw. die Sperrklinke 4 über eine Lagerfläche 10. Zur Realisierung der Lagerung der Sperrklinke 4 im Beispielfall gegenüber der Basis bzw. im Schlosskasten 1 um die Achse 7 gleitet die fragliche Lagerfläche 10 an einem ortsfesten Stützkörper 11 entlang, der quasi die Funktion eines bisher im Stand der Technik realisierten Lagerbolzens übernimmt. Denn der Stützkörper 11 ist an die Basis 1 angeschlossen. Es ist sogar möglich, dass der Stützkörper 11 einen Bestandteil der Basis 1 darstellt, nämlich als hochgebogene Lasche des Schlosskastens 1 ausgelegt ist, wie dies die Variante in der Fig. 5 zeigt, auf die nachfolgend noch näher eingegangen werden wird.

Erfindungsgemäß ist der ortsfeste Stützkörper 11 mit einer offenen Lagerwanne 12 zur Aufnahme der Lagerfläche 10 ausgerüstet. Die Lagerfläche 10 des Gesperrebauteils bzw. der Sperrklinke 4 ist nach dem Ausführungsbeispiel an einem Lagerzapfen 13 vorgesehen. Tatsächlich stellt dieser Lagerzapfen 13 einen Bestandteil der Sperrklinke 4 im Beispielfall dar. Außerdem ist der Lagerzapfen 13 frontseitig mit der zuvor bereits angesprochenen Lagerfläche 10 ausgerüstet, welche in Verbindung mit der offenen Lagerwanne 12 insgesamt für die Lagerung der Sperrklinke 4 um ihre Achse 7 im Schlosskasten 1 sorgt.

Der Stützkörper 11 verfügt über einen seitlich der Lagerwanne 12 angeordneten Anschlag 14. Tatsächlich sind nach den Ausführungsbeispielen zwei seitlich der Lagerwanne 12 vorgesehene Anschläge 14 realisiert. Die beiden Anschläge 14 nehmen in etwa mittig zwischen sich die Lagerwanne 12 auf. Anhand der Fig. 5 erkennt man, dass die Anschläge 14 nicht nur am Stützkörper 11, sondern auch an einem Kunststoffgehäuse 19 realisiert werden können.

Dabei ist die Auslegung ferner so getroffen, dass der betreffenden Anschlag 14 mit einem Gegenanschlag 15 wechselwirkt. Der Gegenanschlag 15 ist an dem Gesperrebauteil 3, 4 bzw. der Sperrklinke 4 im Beispielfall vorgesehen. Außerdem ist die Auslegung in den Ausführungsbeispielen nach den Figuren 2 bis 5 so getroffen, dass der Gegenanschlag 15 an oder in einer Ummantelung 16 des betreffenden Gesperrebauteils 4 bzw. der Sperrklinke 4 ausgebildet ist. Bei der Ummantelung 16 handelt es sich um eine Kunststoffummantelung der Sperrklinke 4, welche zur Geräuschoptimierung eingesetzt wird. Im Ausführungsbeispiel und erfindungsgemäß übernimmt die Ummantelung 16 nun noch Zusatzfunktionen dahingehend, dass mithilfe der Ummantelung 16 die fraglichen Gegenanschläge 15 für die Anschläge 14 des Stützkörpers 11 zur Verfügung gestellt werden.

So oder so führt die drehbare Lagerung der Sperrklinke 4 mit ihrer Lagerfläche 10 frontseitig des Lagerzapfens 13 innerhalb der offenen Lagerwanne 12 des Stützkörpers 11 einerseits dazu, dass die Achse bzw. Drehachse 7 definiert wird. Andererseits führt das Wechselspiel zwischen den Anschlägen 14 am Stützkörper 11 bzw. am Kunststoffgehäuse 19 mit den Gegenanschlägen 15 am betreffenden Gesperrebauteil bzw. der Sperrklinke 4 dazu, dass Schwenkwinkel $\alpha$ des betreffenden Gesperrebauteils 4 bzw. der Sperrklinke 4 gegenüber dem Stützkörper 11 begrenzt werden, und zwar im Ausführungsbeispiel auf Schwenkwinkel $\alpha$, die bis zu 90° betragen können. Nach dem Ausführungsbeispiel werden Schwenkwinkel $\alpha$ von bis zu 50° beobachtet.

Wie bereits erläutert, handelt es sich bei der Basis 1 um einen metallischen Schlosskasten 1. Auch der Stützkörper 11 ist metallisch ausgebildet und an den Schlosskasten 1 angeschlossen. Im Rahmen der Variante nach der Fig. 5 sind der Stützkörper 11 und der Schlosskasten 1 sogar einstückig ausgebildet, weil der Stützkörper 11 als abgebogene Lasche des Schlosskastens 1 ausgelegt ist. Auf diese Weise definiert der Stützkörper 11 insgesamt einen Widerstandsradius S, welcher sich anhand eines Radius ausgehend vom Schwerpunkt des Stützkörpers 11 bis hin zu seiner Peripherie bemisst. Der fragliche Widerstandsradius S definiert ein vom Stützkörper 11 zur Verfügung gestelltes Widerstandsmoment gegenüber den zuvor bereits angesprochenen Reißkräften F die beispielhaft in der Fig. 2 angedeutet sind. Solche Reißkräfte F treten beispielsweise im Crash-Fall auf.

Neben dem Widerstandsradius S ist für die Erfindung ein Lagerradius R relevant. Dieser Lagerradius R ergibt sich aufgrund der Tatsache, dass die Lagerfläche 10 frontseitig des Lagerzapfens 13 an der Sperrklinke 4 insgesamt bogenförmig ausgebildet ist, so dass sich hierdurch der fragliche Lagerradius R einstellt. Dabei ist die Auslegung insgesamt so getroffen, dass der vorgenannte Widerstandsradius S des Stützkörpers 11 größer als der Lagerradius R ausgelegt ist. Tatsächlich ist meistens die Auslegung so getroffen, dass folgende Relation gilt:

$$S \geq 1{,}2\,R.$$

Vorzugsweise werden sogar Größenverhältnisse von $S \geq 1{,}5\,R$ und insbesondere $S \geq 2\,R$ beobachtet.

Die zuvor bereits angesprochene Ummantelung 16 der Sperrklinke 4 stellt nicht nur die Gegenanschläge 15 für die Anschläge 14 am Stützkörper 11 bzw. dem Kunststoffgehäuse 19 zur Verfügung, sondern die Ummantelung 16 weist darüber hinaus noch wenigstens eine Führungsfläche 18 auf. Diese Führungsfläche 18 gleitet an einer Gegenführungsfläche 18' entlang, welche vom zuvor bereits angesprochenen Kunststoffgehäuse zur Verfügung gestellt wird. Mithilfe des Kunststoffgehäuses 19 wird der Schlosskasten 1 verschlossen. Bei dem fraglichen Kunststoffgehäuse handelt es sich meistens um eine sogenannte Schlosshaube. Jedenfalls sorgt die Wechselwirkung zwischen der Führungsfläche 18 an der Sperrklinke 4 einerseits mit der Gegenführungsfläche 18' am Kunststoffgehäuse 19 andererseits dafür, dass das Gesperrebauteil 4 eine einwandfrei Führung bei seiner Drehbewegung um die Achse 7 erfährt. Außerdem wird das fragliche Gesperrebauteil bzw. die Sperrklinke 4 in Anlage an dem Stützkörper 11 gehalten. Das heißt, Wechselwirkung zwischen der Führungsfläche 18 und der Gegenführungsfläche 18' sorgt dafür, dass der Lagerzapfen 13 mit seiner Lagerfläche 10 in Anlage innerhalb der offenen Lagerwanne 12 verbleibt und hiervon nicht getrennt wird.

Im Ausführungsbeispiel nach der Fig. 2 ist die Führungsfläche 18 in bzw. an der Ummantelung 16 der Sperrklinke 4 realisiert. Hier ist die Auslegung so getroffen, dass die Führungsfläche 18 in der Ummantelung 16 den Stützkörper 11 außenumfangsseitig umgreift. Der Stützkörper 11 verfügt über eine entsprechende Gegenführungsfläche 18', so dass auf diese Weise der Lagezapfen 13 an der Sperrklinke 4 mit seiner frontseitigen Lagefläche 10 in Anlage an der offenen Lagerwanne 12 des Stützkörpers 11 gehalten wird.

Nach dem Ausführungsbeispiel kann die Führungsfläche 18 auch alternativ oder zusätzlich von einem angedeuteten Kunststoffgehäuse 19 zur Verfügung gestellt werden, welches dazu dient, den Schlosskasten 1 zu verschließen. Bei dem fraglichen Kunststoffgehäuse handelt es sich meistens um eine sogenannte Schlosshaube. Jedenfalls sorgt die wenigstens eine Führungsfläche 18 dafür, dass das Gesperrebauteil 4 eine Einwandfreie Führung bei seiner Drehbewegung um die Achse 7 erfährt und insbesondere die gegenseitige Anlage der Lagerfläche 10 innerhalb der offenen Lagerwanne 12 nicht getrennt wird.

Im Ausführungsbeispiel nach der Fig. 2 ist die Führungsfläche 18 in bzw. an der Ummantelung 16 der Sperrklinke 4 realisiert. Hier ist die Auslegung so getroffen, dass die Führungsfläche 18 in der Ummantelung 16 den Stützkörper 11 außenumfangsseitig umgreift, so dass auf diese Weise der Lagerzapfen 13 an der Sperrklinke 4 mit seiner frontseitigen Lagerfläche 10 in Anlage an der offenen Lagerwanne 12 des Stützkörpers 11 gehalten wird.

Bei sämtlichen Ausführungsbeispielen ist die Auslegung insgesamt so getroffen, dass der an der Sperrklinke 4 vorgesehene Lagerzapfen 13 zumindest im Bereich seiner frontseitigen Lagerfläche 10 die Ummantelung 16 nicht aufweist, so dass in diesem Bereich eine einwandfreie Kraftübertragung vom metallischen Lagerzapfen 13 auf den ebenfalls metallischen Stützkörper 11 erfolgen kann, so dass die hieran im Crash-Fall angreifenden Zerreißkräfte F nicht zu etwaigen Kunststoffverformungen korrespondieren.

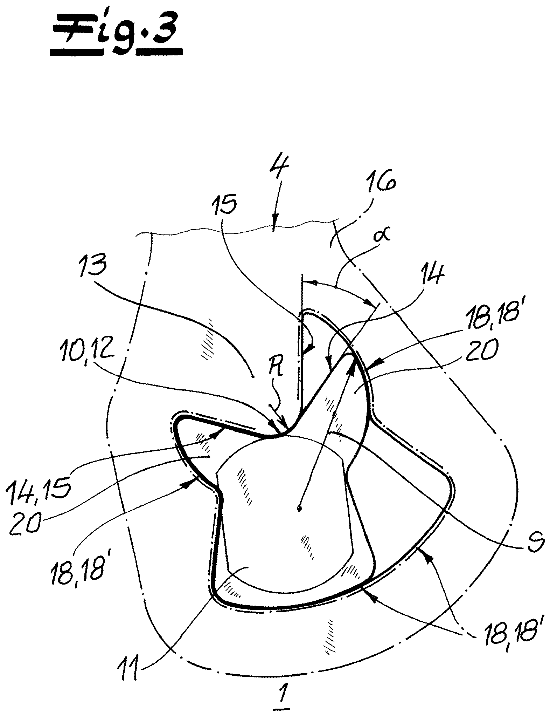

Bei der Variante nach der Fig. 3 ist ebenfalls eine Führungsfläche 18 an der Kunststoffummantelung 16 der Sperrklinke 4 vorgesehen, welche den dortigen Stützkörper 11 erneut außenumfangsseitig umgreift. Auf diese Weise wird wiederum sichergestellt, dass der Lagerzapfen 13 an der Sperrklinke 4 mit seiner Lagerfläche 10 in Anlage an der offenen Lagerwanne 12 des Stützkörpers 11 gehalten wird. Zusätzlich erkennt man hier noch weitere Führungsflächen 18 bzw. Gegenführungsflächen 18', welche erneut in der Ummantelung 16 bzw. am Stützkörper 11 ausgebildet sind und mit die Anschläge 14 tragenden seitlichen Flügeln 20 des Stützkörpers 11 wechselwirken. Diese Flügel 20 weisen nicht nur die Anschläge 14 auf, welche mit Gegenanschlägen 15 in oder an der Ummantelung bzw. Kunststoffummantelung 16 wechselwirken. Sondern die Flügel 20 sind auch mit einer an die Anschläge 14 unterseitig anschließenden Bogenform ausgerüstet. Dadurch werden in diesem Bereich Gegenführungsflächen 18' definiert, welche mit den Führungsflächen 18 in bzw. an der Ummantelung 16 wechselwirken.

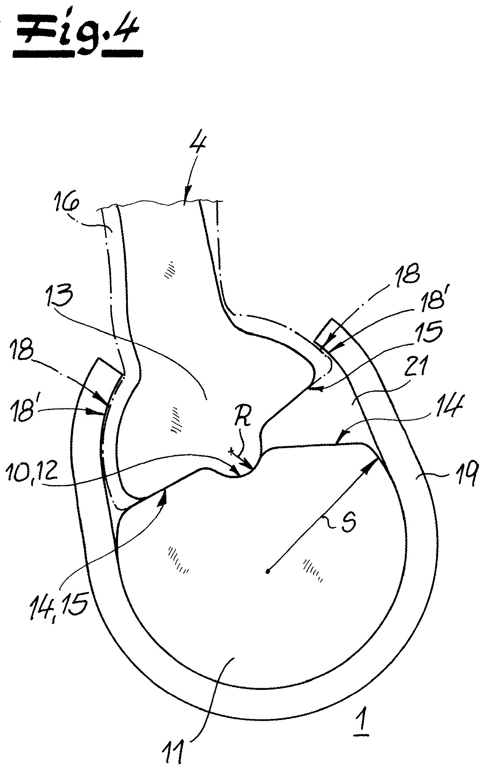

Die Variante nach der Fig. 4 ist eine Gegenführungsfläche 18' vorgesehen, welche im Kunststoffgehäuse 19 bzw. der Kunststoffhaube 19 realisiert ist. Die Gegenführungsfläche 18' in oder an der Kunststoffhaube 19 wechselwirkt mit einer zugehörigen Führungsfläche 18 der Ummantelung 16. Dazu ist die Kunststoffhaube 19 mit einer Kammer 21 ausgerüstet, welche offen ausgelegt ist. Außerdem umgreift die Kunststoffhaube 19 den Stützkörper 11 außenumfangsseitig sowie zusätzlich den in diesem Fall meniskusartig ausgebildeten Lagerzapfen 13 der Sperrklinke 4. Lagerfläche 10 in Anlage an der Lagerwanne 12 des Stützkörpers 11 gehalten. Denn hierbei sind die Gegenführungsflächen 18' einerseits am Kunststoffgehäuse 19 und andererseits die Führungsflächen 18 außenumfangsseitig der Ummantelung 16 der Sperrklinke 4 realisiert. Schließlich wird bei der dritten Ausführungsvariante nach der Fig. 5 so vorgegangen, dass die dortige Führungsfläche 18 in bzw. an der Ummantelung 16 der Sperrklinke 4 mit dem bereits angesprochenen Bogensegment 17 am Stützkörper 11 bzw. am Kunststoffgehäuse 19 wechselwirkt. Da das Bogensegment 17 des Stützkörpers 11 bzw. des Kunststoffgehäuses 19 die fragliche Führungsfläche 18 der Sperrklinke 4 übergreift und mit der korrespondierenden Gegenführungsfläche 18' ausgerüstet ist, wird erneut durch diese Wechselwirkung sichergestellt, dass die Sperrklinke 4 mit ihrem Lagerzapfen 13 und der frontseitigen Lagerfläche 10 in Anlage an der offenen Lagerwanne 12 gehalten wird. Die Führungsfläche 18 ist zu diesem Zweck unkonkret am Lagerzapfen 13 der Sperrklinke realisiert.

Sämtlichen Ausführungsbeispielen gemein ist die Möglichkeit, dass zumindest ein insbesondere in der Fig. 1 angedeuteter zusätzlicher Lagerkörper 22 im Eingriffsbereich zwischen den beiden Gesperrebauteilen 3, 4 zur Realisierung beispielsweise einer Rollreibung vorgesehen sein kann. Bei dem fraglichen Lagerkörper 22 kann es sich um einen zylindrischen Körper, eine Kugel oder einen vergleichbaren Drehkörper handeln, welcher meistens in einem Käfig gehalten wird. Nach dem Ausführungsbeispiel findet sich der fragliche Lagerkörper 22 nicht einschränkend an der Sperrklinke 4, und zwar im Bereich ihres Eingriffes bzw. gegenüberliegend zur Hauptrast der Drehfalle 3, um beim Öffnungsvorgang des Gesperres 3, 4 ein besonders reibungsoptimiertes Lösen der Sperrklinke 4 von der Drehfalle 3 zur Verfügung zu stellen.

Bezugszeichenliste

| 1 | Basis, metallischer Schlosskasten |
| 2 | Öffnungen des Schlosskastens |
| 3 | Gesperre(-bauteil), Drehfalle |
| 4 | Gesperre(-bauteil), Sperrklinke |
| 5 | Schließbolzen |
| 6 | Sperrklinkenfeder |

| | |
|---|---|
| 7 | Achse |
| 8 | Öffnungsantrieb |
| 9 | Achse |
| 10 | Lagerfläche |
| 11 | Stützkörper |
| 12 | Lagerwanne |
| 13 | Lagerzapfen |
| 14 | Anschläge |
| 15 | Gegenanschlag |
| 16 | Ummantelung |
| 17 | Bogensegment |
| 18 | Führungsfläche |
| 18' | Gegenführungsfläche |
| 19 | Kunststoffgehäuse / -haube |
| 20 | Flügel |
| 21 | Klammer |
| 22 | Lagerkörper |
| α | Schwenkwinkel |
| S | Widerstandsradius |
| F | Reißkräfte |
| R | Lagerradius |

**Patentansprüche**

1. Türschloss, insbesondere Kraftfahrzeugtürschloss, mit einem Gesperre (3, 4) aus im Wesentlichen Drehfalle (3) und zumindest einer Sperrklinke (4), wobei beide Gesperrebauteile (3, 4) jeweils um eine Achse (9, 7) drehbar an einer Basis (1) gelagert sind und dazu das wenigstens eine Gesperrebauteil (3, 4) mit einer Lagerfläche (10) an einem ortsfesten Stützkörper (11) entlanggleitet, **dadurch gekennzeichnet, dass** der Stützkörper (11) mit einer offenen Lagerwanne (12) zur Aufnahme der Lagerfläche (10) ausgerüstet ist.

2. Türschloss nach Anspruch 1, **dadurch gekennzeichnet, dass** das Gesperrebauteil (3, 4) einen die Lagerfläche (10) aufweisenden Lagerzapfen (13) besitzt.

3. Türschloss nach Anspruch 2, **dadurch gekennzeichnet, dass** die Lagerfläche (10) frontseitig des Lagerzapfens (13) ausgebildet ist.

4. Türschloss nach einem der Ansprüche 1 bis 3, **dadurch gekennzeichnet, dass** der Stützkörper (11) zumindest einen seitlich der Lagerwanne (12) angeordneten Anschlag (14) aufweist.

5. Türschloss nach Anspruch 4, **dadurch gekennzeichnet, dass** der Anschlag (14) mit einem Gegenanschlag (15) des Gesperrebauteils (3, 4) wechselwirkt.

6. Türschloss nach Anspruch 4 oder 5, **dadurch gekennzeichnet, dass** der Anschlag (14) und der Gegenanschlag (15) eine Schwenkbewegung des Gesperrebauteils (3, 4) gegenüber dem Stützkörper (11) auf Schwenkwinkel (α) bis zu 90°, vorzugsweise bis zu 60° und besonders bevorzugt bis zu 50° begrenzen.

7. Türschloss nach einem der Ansprüche 1 bis 6, **dadurch gekennzeichnet, dass** zumindest ein zusätzlicher Lagerkörper (22) im Eingriffsbereich zwischen den beiden Gesperrebauteilen (3, 4) zur Realisierung einer Rollreibung vorgesehen ist.

8. Türschloss nach einem der Ansprüche 1 bis 7, **dadurch gekennzeichnet, dass** die Basis (1) als vorzugsweise metallischer Schlosskasten (1) ausgebildet ist.

9. Türschloss nach einem der Ansprüche 1 bis 8, **dadurch gekennzeichnet, dass** der Stützkörper (11) einen zu seinem Widerstandsmoment gehörigen Widerstandsradius (S) aufweist.

10. Türschloss nach einem der Ansprüche 1 bis 9, **dadurch gekennzeichnet, dass** die Lagerfläche (10) bogenförmig ausgebildet ist und einen Lagerradius (R) aufweist.

11. Türschloss nach Anspruch 9 oder 10, **dadurch gekennzeichnet, dass** der Widerstandsradius (S) größer als der Lagerradius (R) ausgebildet ist.

12. Türschloss nach einem der Ansprüche 1 bis 11, **dadurch gekennzeichnet, dass** das Gesperrebauteil (3, 4) eine Ummantelung (16) aus vorzugsweise Kunststoff aufweist.

13. Türschloss nach einem der Ansprüche 1 bis 12, **dadurch gekennzeichnet, dass** zusätzlich wenigstens eine Führungsfläche (18) vorgesehen ist.

14. Türschloss nach Anspruch 13, **dadurch gekennzeichnet, dass** die Führungsfläche (18) in oder an der Ummantelung (16) des Gesperrebauteils (3, 4) und/oder einem Kunststoffgehäuse (19) vorgesehen ist.

15. Türschloss nach Anspruch 13 oder 14, **dadurch gekennzeichnet, dass** die Führungsfläche (18) mit einer Gegenführungsfläche 18' wechselwirkt, welche am Gesperrebauteil (3, 4) und/oder dessen Ummantelung (16) und/oder dem Kunststoffgehäuse (19) ausgebildet ist.

**Claims**

1. Door latch, in particular motor vehicle door latch, comprising a locking mechanism (3, 4) consisting substantially of a catch (3) and at least one pawl (4), both locking mechanism components (3, 4) being mounted on a base (1) so as to rotate around a shaft (9, 7) and the at least one locking mechanism component (3, 4) sliding along with a bearing surface (10) on a stationary support body (11), **characterized in that** the support body (11) is equipped with an open bearing trough (12) for receiving the bearing surface (10).

2. Door latch according to claim 1, **characterized in that** the locking mechanism component (3, 4) comprises a bearing pin (13) having the bearing surface (10).

3. Door latch according to claim 2, **characterized in that** the bearing surface (10) is formed on the front of the bearing pin (13).

4. Door latch according to any of claims 1 to 3, **characterized in that** the support body (11) has at least one stop (14) arranged on the side of the bearing trough (12).

5. Door latch according to claim 4, **characterized in that** the stop (14) interacts with a counter stop (15) of the locking mechanism component (3, 4).

6. Door latch according to either claim 4 or claim 5, **characterized in that** the stop (14) and the counter stop (15) limit a pivoting movement of the locking mechanism component (3, 4) relative to the support body (11) to pivot angles ($\alpha$) up to 90°, preferably up to 60° and particularly preferably up to 50°.

7. Door latch according to any of claims 1 to 6, **characterized in that** at least one additional bearing body (22) is provided in the engagement region between the two locking mechanism components (3, 4) for executing a rolling friction.

8. Door latch according to any of claims 1 to 7, **characterized in that** the base (1) is designed as a preferably metal latch case (1).

9. Door latch according to any of claims 1 to 8, **characterized in that** the support body (11) has a resistance radius (S) belonging to its resistance torque.

10. Door latch according to any of claims 1 to 9, **characterized in that** the bearing surface (10) is curved and has a bearing radius (R).

11. Door latch according to either claim 9 or claim 10, **characterized in that** the resistance radius (S) is greater than the bearing radius (R).

12. Door latch according to any of claims 1 to 11, **char-**

**acterized in that** the locking mechanism component (3, 4) has a casing (16) made of preferably plastics material.

13. Door latch according to any of claims 1 to 12, **characterized in that** at least one guide surface (18) is additionally provided.

14. Door latch according to claim 13, **characterized in that** the guide surface (18) is provided in or on the casing (16) of the locking mechanism component (3, 4) and/or in or on a plastics housing (19).

15. Door latch according to either claim 13 or claim 14, **characterized in that** the guide surface (18) interacts with a counter guide surface 18' which is formed on the locking mechanism component (3, 4) and/or on the casing (16) thereof and/or on the plastics housing (19).

**Revendications**

1. Serrure de porte, en particulier serrure de porte de véhicule automobile, comportant un mécanisme de verrouillage (3, 4) composé sensiblement d'un loquet rotatif (3) et d'au moins un cliquet de verrouillage (4), dans laquelle les deux pièces de mécanisme de verrouillage (3, 4) sont montées de manière à pouvoir tourner respectivement autour d'un axe (9, 7) au niveau d'une base (1) et ainsi, l'au moins une pièce de mécanisme de verrouillage (3, 4) glisse, au moyen d'une surface de palier (10), le long d'un corps d'appui (11) fixe, **caractérisée en ce que** le corps d'appui (11) est équipé d'un creux de palier (12) ouvert permettant de recevoir la surface de palier (10).

2. Serrure de porte selon la revendication 1, **caractérisée en ce que** la pièce de mécanisme de verrouillage (3, 4) possède un tourillon de palier (13) présentant la surface de palier (10).

3. Serrure de porte selon la revendication 2, **caractérisée en ce que** la surface de palier (10) est réalisée côté avant du tourillon de palier (13).

4. Serrure de porte selon l'une des revendications 1 à 3, **caractérisée en ce que** le corps d'appui (11) présente au moins une butée (14) disposée latéralement par rapport au creux de palier (12).

5. Serrure de porte selon la revendication 4, **caractérisée en ce que** la butée (14) coopère avec une contre-butée (15) de la pièce de mécanisme de verrouillage (3, 4).

6. Serrure de porte selon la revendication 4 ou 5, **ca-**

**ractérisée en ce que** la butée (14) et la contre-butée (15) délimitent un mouvement de pivotement de la pièce de mécanisme de verrouillage (3, 4) par rapport au corps d'appui (11) selon un angle de pivotement ($\alpha$) d'au plus 90°, de préférence d'au plus 60° et de manière particulièrement préférée d'au plus 50°.

7. Serrure de porte selon l'une des revendications 1 à 6, **caractérisée en ce qu'**au moins un corps de palier supplémentaire (22) est prévu dans la zone de mise en prise entre les deux pièces de mécanisme de verrouillage (3, 4) pour la réalisation d'une friction de roulement.

8. Serrure de porte selon l'une des revendications 1 à 7, **caractérisée en ce que** la base (1) est réalisée sous la forme d'un palastre (1) de préférence métallique.

9. Serrure de porte selon l'une des revendications 1 à 8, **caractérisée en ce que** le corps d'appui (11) présente un rayon de résistance (S) associé à son couple de résistance.

10. Serrure de porte selon l'une des revendications 1 à 9, **caractérisée en ce que** la surface de palier (10) est réalisée en forme d'arc et présente un rayon de palier (R).

11. Serrure de porte selon la revendication 9 ou 10, **caractérisée en ce que** le rayon de résistance (S) est supérieur au rayon de palier (R).

12. Serrure de porte selon l'une des revendications 1 à 11, **caractérisée en ce que** la pièce de mécanisme de verrouillage (3, 4) présente une enveloppe (16) de préférence en matière plastique.

13. Serrure de porte selon l'une des revendications 1 à 12, **caractérisée en ce qu'**au moins une surface de guidage (18) est en outre prévue.

14. Serrure de porte selon la revendication 13, **caractérisée en ce que** la surface de guidage (18) est prévue dans ou sur l'enveloppe (16) de la pièce de mécanisme de verrouillage (3, 4) et/ou un boîtier en matière plastique (19).

15. Serrure de porte selon la revendication 13 ou 14, **caractérisée en ce que** la surface de guidage (18) interagit avec une contre-surface de guidage 18' réalisée sur la pièce de mécanisme de verrouillage (3, 4) et/ou son enveloppe (16) et/ou le boîtier en matière plastique (19).

EP 3 942 133 B1

**Fig.1**

# Fig.2

# Fig.3

Fig.4

# *Fig.5*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1020162015336 A1
- DE 102009029023 A1
- DE 102016215336 A